# EUROPEAN PATENT APPLICATION

(11) **EP 2 283 928 A2**
(43) Date of publication of application: **16.02.2011**
(21) Application number: 10161367.7
(22) Date of filing: 28.04.2010
(51) Int. Cl.: B05B 9/00, A01M 7/00

(54) **Sprayer with measuring device**

(30) Priority: 11.08.2009 US 538933
(71) Applicant: H.D. HUDSON MANUFACTURING COMPANY, Chicago, IL 60611-3748 (US)
(72) Inventor: Hudson, William, Fox Point, WI 53217 (US); Downing, Steve, Shell Rock, IA 50670 (US); Beissel, Wayne, Hastings, MN 55033 (US); Schasel, Mike, Zeeland, MI 49464 (US)
(74) Representative: Matthews, Heather Clare

(57) **Abstract**

A measuring device that can be used with compression sprayers. The sprayer has a tank (12) that holds liquid, a pump (14) that enables a user to compress air in the tank, a spray nozzle (16) that is in fluid communication with the tank, an inlet opening (18) to the tank, and a funnel surface (20) that extends upwardly and outwardly from the inlet opening. A special gate (22) fits onto a broken rim (40) that extends upwardly from the inlet opening, and rotates between one position (in which liquid on the funnel surface flows into the tank through gaps (42) in the broken rim) and another position (in which wall sections (60) on the gate block the gaps). Markings (62) on the funnel surface enable a user to measure a quantity of liquid that is retained on the funnel surface. Ribs (46) and recesses (58) on the broken rim and on the gate releasably, axially secure the gate to the broken rim.

## Description

### Field of the Invention

The present invention relates generally to sprayers, including compression sprayers used domestically for spraying pesticides, herbicides, or fertilizers on lawns or gardens.

### Background to the Invention

When using a compression sprayer, it is common for a user to add chemicals or other additives to a volume of water in the tank. For optimal use, it is often important for the amount of additive to be carefully measured.

U.S. patent no. 7,404,420 discloses a sprayer that has a measuring dock that is disposed alongside the funnel spillway that is used to fill the sprayer with liquid. A measuring device is snapped into that dock. Ledges project internally from the outer sides of the measuring device. These ledges are provided at different heights in the device, and indicate the volume of liquid in the device.

### Summary of the Invention

The applicants have developed a new measuring device that can be used with sprayers, including compression sprayers. Like some prior known compression sprayers, the sprayer has a tank that holds liquid, a pump that enables a user to compress air in the tank, a spray nozzle that is in fluid communication with the tank, an inlet opening to the tank, and a funnel surface that extends upwardly and outwardly from the inlet opening. Unlike prior known compression sprayers, the new sprayer also has markings on the funnel surface and a special gate. The gate rotates between a first position in which liquid on the funnel surface is blocked from entering the tank and a second position in which liquid on the funnel surface flows into the tank. The markings on the funnel surface enable a user to measure a quantity of liquid that is retained on the funnel surface when the gate is in the first position.

To use the new sprayer, a user can fill the tank with the desired volume of liquid, then move the gate to the first position. The additive can then be placed on the funnel surface, where it is retained. The volume of additive can be measured using the markings, and adjusted as needed. When the desired volume is achieved, the user can rotate the gate, opening a channel for the additive to then flow into the tank.

The present invention thus provides a sprayer that has: a tank that holds liquid; a spray nozzle that is in fluid communication with the tank; an inlet opening to the tank; a funnel surface that extends upwardly from the inlet opening; a gate that rotates between a first position in which liquid on the funnel surface is blocked from entering the tank and a second position in which the liquid on the funnel surface flows into the tank; and markings on the funnel surface that enable a user to measure a quantity of liquid is retained on the funnel surface.

In a more specific embodiment, the gate fits onto, and rotates around, a broken rim that extends upwardly from the inlet opening to the tank. The material of the broken rim and/or the gate is preferably flexible or deformable to facilitate interconnection of the components. There are one or more gaps in the broken rim that enable liquid on the funnel surface to pass or drain from the funnel surface into the tank when the gate is in the second position. There are also one or more wall sections on the gate that block the gap in the broken rim when the gate is in the first position. One or more slots on the gate align with the gap in the broken rim when the gate is in the second position. Ribs and recesses on the broken rim and on the gate releasably, axially secure the gate to the broken rim.

In a preferred aspect, the present invention provides a sprayer that has: a tank that holds liquid; a pump that enables a user to compress air into the tank; a spray nozzle that is in fluid communication with the tank; an inlet opening to the tank; a funnel surface that extends upwardly and outwardly from the inlet opening; a broken rim that extends upwardly from the inlet opening to the tank; a gate that fits onto the broken rim and rotates about the broken rim between a first position and a second position; at least one gap in the broken rim through which liquid on the funnel surface can pass from the funnel surface into the tank when the gate is in the second position; at least one wall on the gate that blocks the gap in the broken rim when the meter is in the first position; at least one slot on the gate that is disposed adjacent the wall on the gate and aligns with the gap in the broken rim when the meter is in the second position; markings on the funnel surface that enables a user to measure a quantity of liquid retained on the funnel surface; ribs and recesses on the broken rim and on the gate that releasably, axially secure the meter to the broken rim.

### Brief Description of the Drawings

The invention may be better understood by referring to the accompanying drawings which illustrate, by way of example, one embodiment of a sprayer in accordance with the invention, and in which:

FIG. 1 is a perspective view of a compression sprayer that uses the invention.

FIG. 2 is an enlarged perspective view of the compression sprayer, showing the inlet opening, the funnel surface, and the gate.

FIG. 3 is another enlarged view of inlet opening and funnel of the compression sprayer, with the gate removed.

FIG. 4 is an enlarged view of the gate.

### Detailed Description

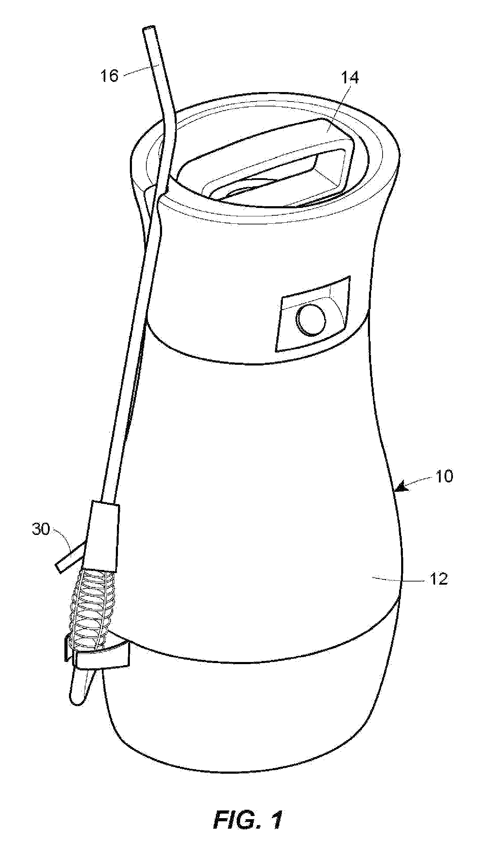

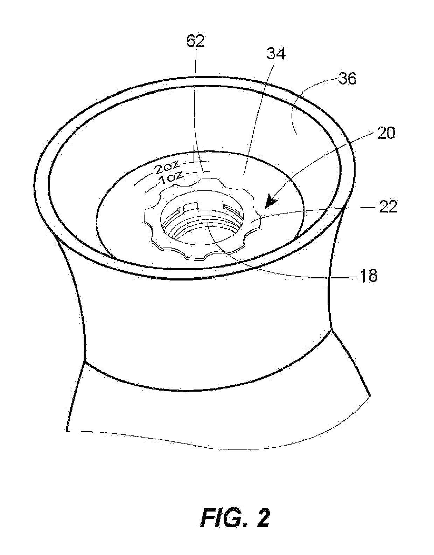

As described in more detail below, the sprayer 10 seen in FIG. 1 has a tank 12, a pump 14, and a spray nozzle 16. As seen in FIG. 2, the sprayer also has an inlet opening 18, a funnel surface 20, and a gate 22.

The tank 12 holds liquid, and can be of any convenient size. The illustrated tank, for example, holds approximately 1.0 gallons (3.79 litres) of liquid. Larger or smaller tanks can also be used. The illustrated is tank is made of plastic, but other materials, including steel, aluminum or other materials, can also be used.

The pump 14 enables a user to compress air in the tank 12. The illustrated pump is a conventional piston-type pump that screws into the inlet opening 18 of the sprayer 10 after the tank is filled with liquid. Other types of pumps, including those that are integral with the tank or fit onto a separate inlet opening to the tank, can also be used.

The spray nozzle 16 is in fluid communication with the tank 12, and is used to direct the desired flow. The nozzle seen in FIG. 1 is a conventional wand nozzle, and includes a trigger 30 that enables the user to start and stop the flow of liquid through the nozzle with the same hand that holds the spray nozzle. Other types of spray nozzles can also be used.

As seen in FIG. 2, the inlet opening 18 leads to the interior of the tank 12 and can be used to add liquid or additives to the tank. In this example, the inlet opening is located on the top of the tank, and is the form of a vertical, internally-threaded, circular cylinder with a diameter of approximately 2" (51 mm). This is a preferred arrangement. However, other arrangements can also be implemented without losing the benefit of the present invention.

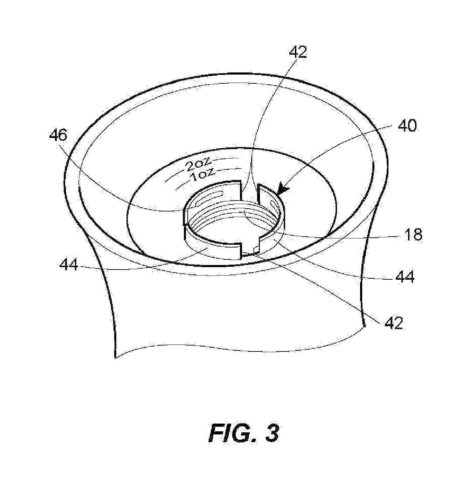

As best seen in FIG. 3, the funnel surface 20 extends upwardly and outwardly from the inlet opening 18, and thus, when the sprayer 10 is at rest in an upright position, directs liquid into the inlet opening 18. In this illustration, the funnel surface has a sloped bottom surface 34 that adjoins the inlet opening 18, and a steep outer wall 36 that extends upwardly from the outer edge of the bottom surface. In this particular example, the sloped bottom surface slopes upwardly and outwardly from the inlet opening at an angle of approximately 4 degrees. Other arrangements can also be used.

Inside the funnel surface 20, a broken rim 40 extends upwardly from (and forms part of) the inlet opening 18. In the illustrated example, the broken rim has an internal diameter of approximately 2 1/2" (63.5mm). Three laterally spaced gaps 42 separate the rim into three similar rim sections 44, with each gap having a radial width (measured between the adjoining sides of the bordering rim sections) of approximately ¾" (19mm) and being approximately 5/8" (16mm) high. Each rim section in the illustrated device also has an internally projecting rib 46 that projects about 1/20" (1.3mm) inwardly, and traverses about 22 degrees of the circumference of the broken rim. These parts of the broken rim will be discussed in more detail below. It is preferred that the broken rim be constructed of a material that has some flexibility, so that a user can deflect the rim sections outwardly without undue exertion. In this example, the broken rim is integrally molded with the funnel surface, but integral molding is not necessary to achieve many of the benefits of the invention.

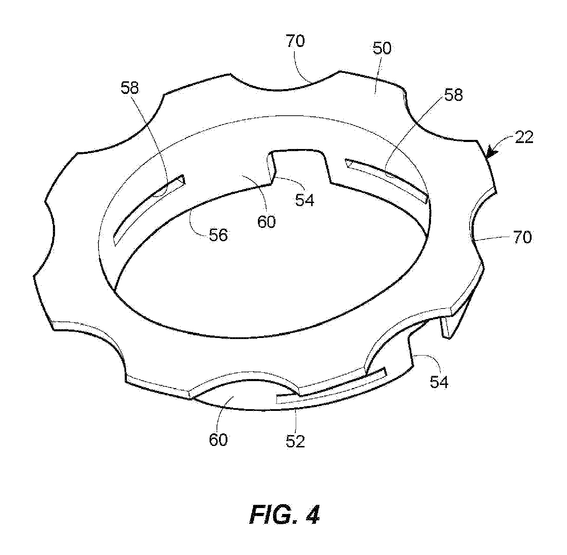

The gate 22, best seen in FIG. 4, fits onto the broken rim 40 and rotates about the broken rim between a first position and a second position. In this illustration, the gate has an upper face 50 and a lower cylindrical rim 52 that extends below the upper face and fits within the broken rim. This lower cylindrical rim has an outer diameter that matches the inner diameter of the broken rim. It also has three equally-spaced slots 54 on the lower edge 56, each of which is approximately ½" (12.7mm) wide and ¼" (6.35mm) high. Between these slots, the cylindrical rim has three spaced peripheral recesses 58 that are approximately 1/6" (4.23mm) high and each traverse about 45 degrees of the circumference of the cylindrical rim. In this example, the recesses are in the form of slots that extend all the way through the lower cylindrical rim of the gate. In some arrangements, it may not be necessary for the slot to extend all the way through the rim. The slots here are positioned with the right edge of each recess near a slot and the left edge spaced at an angular distance of about 37 degrees from the next slot.

The recesses 58 on the lower cylindrical rim 52 of the gate 22 snap over the internal ribs 46 on the broken rim 40, releasably, axially securing the gate onto the broken rim. Because the internal ribs traverse less of the circumference of the broken rim than the recesses do, the cooperation of these two parts enables the gate to be rotated about the broken rim to a limited extent. In this example, the gate can be rotated through a range of about 22 degrees. A similar connection can be achieved by using outer ribs on the gate and recesses on the broken rim, or by sizing the gate to fit over the outside of the broken rim, and using either recesses on the gate and outer ribs on the broken rim, or recesses on the broken rim and inner ribs on the gate. Arrangements that do not require ribs and recesses can also be used.

The lower cylindrical rim 52 on the gate 22 also cooperates with the broken rim 40 to selectively control flow of liquid from the funnel surface 20 into the inlet opening 18. When the gate is in the first position, solid wall sections 60 of the gate (which are provided, in this example, between the left edge of each recess and the adjacent slot) fill the laterally spaced gaps 42 in the broken rim, preventing liquid on the funnel surface from draining into the inlet opening. When the gate is rotated to the second position, however, the solid wall sections on the gate slide behind the rim sections 44 of the broken rim, and the slots 54 on the lower edge 56 of the gate slide into alignment with the laterally-spaced gaps in the broken rim. This opens a channel from the funnel surface to the inlet opening, enabling the liquid retained on the funnel surface to drain into the inlet opening.

Markings 62 on the funnel surface 20 enable a user to measure a quantity of liquid retained on the funnel surface. In the example seen in FIG. 2, the markings consist of circumferential lines formed on the sloped bottom surface 34, each of which corresponds with a volume indicator such as "1 oz." (29.5ml) (for a line that corresponds with the boundary of one ounce of liquid) or "2 oz." (59ml) (for a line that corresponds with the boundary of two ounces of liquid). Other arrangements are possible, but this form of marking is believed to be particularly simple and durable.

In the example seen in FIG. 4, the gate 22 has optional finger grips 70 disposed about the periphery of the upper face 50 face of the gate. The illustrated upper face is about 11/16" (17.46mm) above the lower edge 56 of the gate. Disposing the finger grips in that location makes it easy for a user to rotate the gate without touching and additive that may be retained on the funnel surface.

The disclosed arrangement can be simpler to build, easier to use, and more rugged than, for example, the device seen in US 7,404,420.

This description of the invention has been provided for illustrative purposes. Revisions or modifications may be apparent to those of ordinary skill in the art without departing from the invention. The full scope of the invention is set forth in the following claims.

## Claims

1. A sprayer comprising:
a tank for holding liquid;
a spray nozzle that is in fluid communication with the tank;
an inlet opening to the tank;
a funnel surface that extends upwardly from the inlet opening;
a gate that is rotatable between a first position in which liquid on the funnel surface is blocked from entering the tank and a second position in which liquid on the funnel surface flows into the tank; and
markings on the funnel surface for measuring a quantity of liquid that is retained on the funnel surface.

2. A sprayer as recited in claim 1, that also has:
a pump that enables a user to compress air in the tank.

3. A sprayer as recited in claim 1 or 2, in which:
the gate fits onto a part of the inlet opening, radially inwardly from the funnel surface.

4. A sprayer as recited in claim 1, 2 or 3, in which:
the gate fits onto a broken rim that extends upwardly from the inlet opening.

5. A sprayer as recited in claim 4, in which:
the broken rim has at least one gap through which liquid on the funnel surface can pass from the funnel surface into the tank when the gate is in the second position.

6. A sprayer as recited in claim 5, in which:
the gate has at least one wall that blocks the gap in the broken rim when the gate is in the first position; and
the gate has at least one slot that is disposed adjacent the wall on the gate and aligns with the gap in the broken rim when the gate is in the second position.

7. A sprayer as recited in claim 4, 5 or 6, in which:
the gate and the broken rim have ribs and recesses that releasably, axially secure the gate to the broken rim.

8. A sprayer as recited in any one of the preceding claims, in which:
the gate fits onto a part of the inlet opening; and
the gate and the part of on which the gate fits have ribs and recesses that releasably, axially secure the gate to the part of the inlet opening on which the gate fits.

9. A sprayer as recited in claim 8, in which:
the gate fits onto a part of the inlet opening, inwardly from the funnel surface;
and the gate and the part of on which the gate fits have ribs and recesses that releasably, axially secure the gate to the part of the inlet opening on which the gate fits.

10. A sprayer as recited in any one of the preceding claims, in which:
the gate fits onto a part of the inlet opening;
the part of the inlet opening has gaps through which liquid on the funnel surface can drain from the funnel surface into the tank when the gate is in the second position;
the gate has rim sections that that block the gaps when the gate is in the first position; and the gate has slots that align with the gaps when the gate is in the second position.

11. A sprayer as recited in any one of the preceding claims, in which:
raised rim sections, separated by gaps, are disposed around the inlet opening;
the gate has a lower cylindrical rim that fits against the rim sections;
the lower cylindrical rim section has slots on its lower edge;
the angular distance between the slots is greater than the angular width of the gaps; and
the angular width of the rim sections is greater than the angular width of the slots.
